# EUROPEAN PATENT APPLICATION

(11) **EP 3 761 488 A1**
(43) Date of publication of application: **06.01.2021**
(21) Application number: 18907505.4
(22) Date of filing: 28.02.2018
(51) Int. Cl.: H02K 11/215, H02K 29/08

(54) **MOTOR, ELECTRIC BLOWER, ELECTRIC VACUUM CLEANER AND HAND DRYER**

(71) Applicant: Mitsubishi Electric Corporation, Tokyo 100-8310 (JP)
(72) Inventor: TSUCHIDA Kazuchika, Tokyo 100-8310 (JP)
(74) Representative: Mewburn Ellis LLP
(86) International application number: PCT/JP2018/007399
(87) International publication number: WO 2019/167152

(57) **Abstract**

A motor is a single-phase motor that includes a rotor having a plurality of magnetic poles and a stator provided to surround the rotor. The stator includes a yoke extending so as to surround a rotation axis of the rotor, a plurality of teeth extending in a direction from the yoke toward the rotation axis, the number of the plurality of teeth being equal to the number of the magnetic poles, and a sensor facing the rotor and disposed between two teeth adjacent to each other in a circumferential direction about the rotation axis among the plurality of teeth. A reference line is defined as a straight line passing through the rotation axis and a middle position between the two teeth in the circumferential direction. A center of the sensor in the circumferential direction is located at a position offset in the circumferential direction with respect to the reference line.

## Description

### TECHNICAL FIELD

The present invention relates to a motor, an electric blower, an electric vacuum cleaner, and a hand dryer.

### BACKGROUND ART

In recent years, sensor-equipped single-phase motors are widely used. The sensor-equipped motor includes a sensor for detecting a magnetic flux from a rotor. For example, Patent Reference 1 discloses a motor in which a Hall effect sensor for detecting a magnetic flux from a rotor is disposed on an outer side of a C-shaped stator core.

### PRIOR ART REFERENCE

### PATENT REFERENCE

### [PATENT REFERENCE 1]

Japanese Patent Application Publication No. 2010-207082 (see FIG. 1)

### SUMMARY OF THE INVENTION

### PROBLEM TO BE SOLVED BY THE INVENTION

However, in order to reduce a size of the motor, it is desirable to dispose the sensor between two teeth of the stator core rather than to dispose the sensor on the outer side of the stator core.

In this regard, when the rotation of the rotor stops, a pole center of the rotor faces the tooth. In this state, the sensor disposed between the two teeth faces an inter-pole portion of the rotor, and thus the magnetic flux detected by the sensor is zero. However, such a situation where an output of the sensor is zero at starting of the motor is not desirable. In order to enhance reliability of the motor, it is desirable that the sensor detects the magnetic flux from the rotor even when the rotation of the rotor stops.

The present invention is intended to solve the above described problem, and an object of the present invention is to enable a sensor to detect a magnetic flux from a rotor when the rotation of the rotor stops, thereby enhancing reliability of a motor.

### MEANS OF SOLVING THE PROBLEM

A motor according to the present invention is a single-phase motor including a rotor having a plurality of magnetic poles and a stator provided to surround the rotor. The stator includes a yoke extending so as to surround a rotation axis of the rotor, a plurality of teeth extending from the yoke in a direction toward the rotation axis, the number of the plurality of teeth being equal to the number of the magnetic poles, and a sensor facing the rotor and disposed between two teeth adjacent to each other in a circumferential direction about the rotation axis among the plurality of teeth. A reference line is defined as a straight line passing through the rotation axis and a middle position between the two teeth in the circumferential direction. A center of the sensor in the circumferential direction is located at a position offset in the circumferential direction with respect to the reference line.

### EFFECTS OF THE INVENTION

According to the present invention, the center of the sensor is located at the position offset in the circumferential direction with respect to the reference line. This enables the magnetic pole to face the sensor when the rotation of the rotor stops. Thus, when the rotation of the rotor stops, the magnetic flux from the rotor can be detected by the sensor, and therefore the reliability of the motor can be enhanced.

### BRIEF DESCRIPTION OF THE DRAWINGS

FIG. 1 is a cross-sectional view showing a motor of a first embodiment.
FIG. 2 is a cross-sectional view showing a part of the motor of the first embodiment.
FIG. 3 is a cross-sectional view showing a structure for holding a sensor of the first embodiment.
FIG. 4 is a cross-sectional view showing the structure for holding the sensor of the first embodiment.
FIG. 5 is a longitudinal-sectional view showing the structure for holding the sensor of the first embodiment.
FIG. 6 is a longitudinal-sectional view showing a desirable example of the structure for holding the sensor of the first embodiment.
FIG. 7 is a longitudinal-sectional view showing an electric blower of the first embodiment.
FIG. 8 is a perspective view showing a moving blade of the first embodiment.
FIG. 9(A) is a diagram showing vanes of a stationary blade of the first embodiment, FIG. 9(B) is a side view showing the stationary blade, and FIG. 9(C) is a diagram showing air guide plates.
FIG. 10 is a cross-sectional view showing a state in which the motor of the first embodiment is fitted into a frame.
FIG. 11 is a schematic diagram showing an airflow in the electric blower of the first embodiment.
FIGS. 12(A) and 12(B) are a side view and a front view, respectively, showing an air guiding function exhibited by the stationary blade of the electric blower of the first embodiment.
FIG. 13 is a diagram showing a configuration of an outer-rotor motor of a comparative example.
FIG. 14 is a graph showing a change in the magnetic flux detected by the sensor of the first embodiment and a change in the magnetic flux detected by a sensor of the comparative example.
FIG. 15 is a graph showing a part of FIG. 14 in an enlarged scale.
FIG. 16 is a cross-sectional view showing a structure for holding a sensor of a modification.
FIG. 17(A) is a cross-sectional view showing a motor of a second embodiment, and FIG. 17(B) is a diagram showing a state in which a stator core is expanded.
FIG. 18 is a cross-sectional view showing a motor of a modification of the second embodiment.
FIG. 19 is a cross-sectional view showing a motor of a second modification of the second embodiment.
FIG. 20 is a cross-sectional view showing a motor of a third modification of the second embodiment.
FIG. 21 is a diagram showing an electric vacuum cleaner to which the electric blower including the motor of each of the embodiments and modifications is applicable.
FIG. 22 is a perspective view showing a hand dryer to which the electric blower including the motor of each of the embodiments and modifications is applicable.

### MODE FOR CARRYING OUT THE INVENTION

Hereinafter, embodiments of the present invention will be described in detail with reference to the drawings. In this regard, the present invention is not limited to these embodiments.

### FIRST EMBODIMENT

### (Configuration of Motor 100)

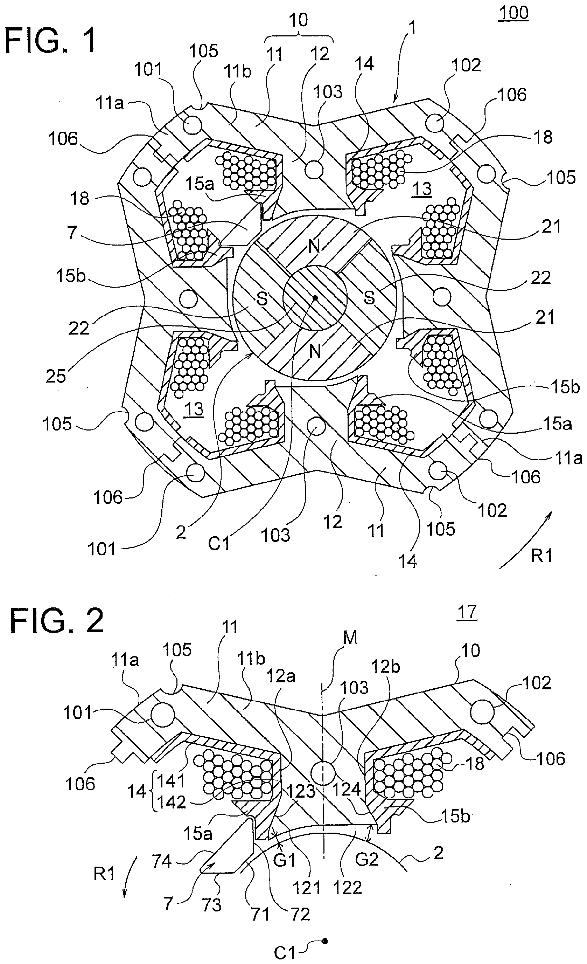

FIG. 1 is a sectional view showing a motor 100 of a first embodiment. The motor 100 is a permanent magnet synchronous motor and is a single-phase motor driven by an inverter. The motor 100 includes a rotor 2 having a rotating shaft 25, and a stator 1 provided so as to surround the rotor 2. The rotor 2 rotates clockwise in FIG. 1 about an axis C1. A rotating direction of the rotor 2 is indicated by the arrow R1.

In the description below, a direction of the axis C1, which is a central axis line (i.e., a rotation axis) of the rotating shaft 25, is referred to as an "axial direction". A circumferential direction about the axis C1 is referred to as a "circumferential direction". A radial direction about the axis C1 is referred to as a "radial direction". A sectional view taken in a plane parallel to the axial direction is referred to as a "longitudinal-sectional view". A sectional view taken in a plane perpendicular to the axial direction is referred to as a "cross-sectional view".

The rotor 2 has the rotating shaft 25 and permanent magnets 21 and 22 fixed to a circumference of the rotating shaft 25. The permanent magnets 21 and 22 are arranged at equal intervals in the circumferential direction, and each of the permanent magnets 21 and 22 constitutes a magnetic pole. An outer circumferential surface of the permanent magnet 21 is, for example, an N pole, while an outer circumferential surface of the permanent magnet 22 is, for example, an S pole, but they may be reversed.

In this example, two permanent magnets 21 and two permanent magnets 22 are alternately arranged in the circumferential direction. That is, the rotor 2 has four magnetic poles. It is noted the number of magnetic poles of the rotor 2 is not limited to four, and only need to be two or more.

The stator 1 is provided on an outer side of the rotor 2 in the radial direction via an air gap. The stator 1 has a stator core 10, insulating portions 14, and coils 18. The stator core 10 is formed by stacking a plurality of stacking elements in the axial direction and integrally fixing them with crimping portions 101, 102, and 103. In this example, the stacking elements are electromagnetic steel sheets, and each electromagnetic steel sheet has a thickness of, for example, 0.25 mm.

The stator core 10 has a yoke 11 surrounding the rotor 2 and a plurality of teeth 12 extending from the yoke 11 in a direction toward the rotor 2 (i.e., inward in the radial direction). The teeth 12 are arranged at equal intervals in the circumferential direction. The number of teeth 12 is equal to the number of magnetic poles of the rotor 2, which is four in this example.

Slots 13 are formed each between two teeth 12 adjacent to each other in the circumferential direction in the stator core 10. The insulating portion 14 made of an insulating resin is disposed in each slot 13. The coils 18 are wound around the teeth 12 via the insulating portions 14.

In an example shown in FIG. 1, the yoke 11 of the stator core 10 has a plurality of arc-shaped back yokes 11a, and linear connecting yokes 11b which are located on an inner side in the radial direction with respect to the back yokes 11a. The back yokes 11a are outermost portions of the stator 1 in the radial direction. The back yokes 11a are arranged at equal intervals in the circumferential direction.

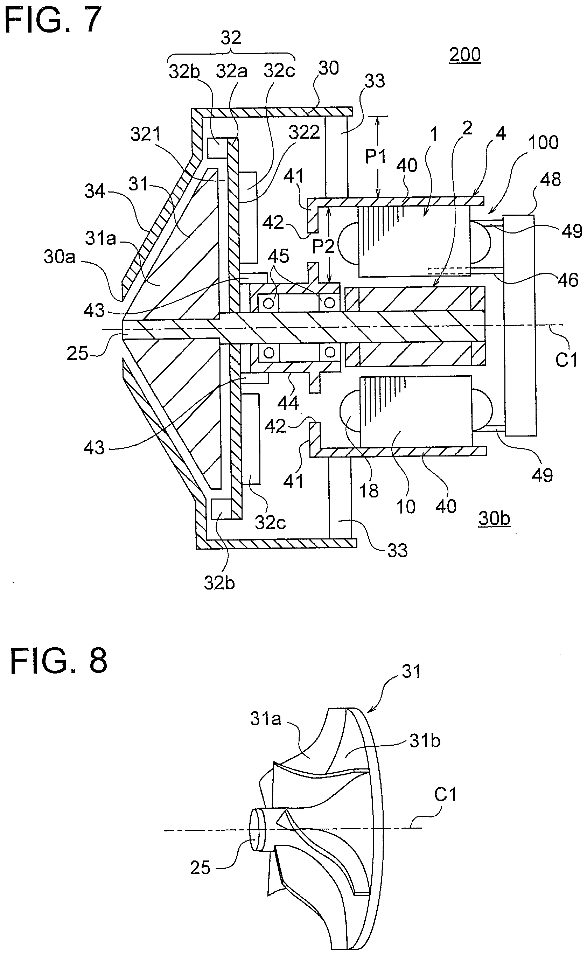

The number of back yokes 11a is equal to the number of teeth 12, which is four in this example. The above described tooth 12 is located between two back yokes 11a adjacent to each other in the circumferential direction. Outer circumferential surfaces of the back yokes 11a engage with an inner circumferential surface of a motor housing portion 40 of a motor frame 4 (FIG. 7).

The connecting yoke 11b extends so as to connect the back yoke 11a with the tooth 12. In this example, the connecting yoke 11b extends linearly so that the connecting yoke 11b is displaced inward in the radial direction as a distance from the back yoke 11a increases. The tooth 12 extends toward the rotor 2 from a portion (i.e., an innermost portion of the yoke 11 in the radial direction) where the two connecting yokes 11b adjacent to each other in the circumferential direction are connected in a V shape.

The back yoke 11a has a split surface (split fitting portion) 106 formed at its center in the circumferential direction. The stator core 10 is split at the split surfaces 106 formed at the back yokes 11a into a plurality of blocks, i.e., split cores 17 (FIG. 2), each of which includes one tooth 12. In this example, the stator core 10 is split into four split cores 17.

The split surface 106 has a convex portion or a concave portion. Of the two split cores 17 adjacent to each other in the circumferential direction, the convex portion formed on the split surface 106 of one split core 17 is fitted into the concave portion formed on the split surface 106 of the other split core 17.

The stator core 10 is integrally fixed at the crimping portions 101, 102, and 103. The crimping portions 101 and 102 are formed in the yoke 11, while the crimping portions 103 are formed in the teeth 12. The crimping portions 101 and 102 are desirably formed at positions as close as possible to the corresponding split surface 106 in the yoke 11, i.e., desirably formed in the back yoke 11a.

Fixing recesses 105, which are grooves elongated in the axial direction, are formed on the outer circumference of the back yokes 11a of the yoke 11. In a state where the stator core 10 is engaged with the motor housing portion 40 of the motor frame 4 (FIG. 7), parts of the motor housing portion 40 are pressed and deformed from its outer circumferential side to be fitted into the fixing recesses 105. This prevents the rotation of the stator 1 within the motor frame 4. In this regard, it is also possible to employ a configuration in which no fixing recess 105 is provided.

FIG. 2 is an enlarged view showing a part of the stator 1. The tooth 12 has a first side surface portion 12a which is a downstream end of the tooth 12 in the rotating direction (indicated by an arrow R1) of the rotor 2 and a second side surface portion 12b which is an upstream end of the tooth 12 in the rotating direction of the rotor 2. Each of the first side surface portion 12a and the second side surface portion 12b extends in parallel with a straight line M in the radial direction that passes through a center of the tooth 12 in the circumferential direction (i.e., a middle position between the side surface portions 12a and 12b in the circumferential direction).

An inner end portion of the tooth 12 in the radial direction (hereinafter referred to as an end portion) has an asymmetric shape with respect to the straight line M. In particular, the end portion of the tooth 12 facing the rotor 2 include a first end edge 121 located on the downstream side in the rotating direction of the rotor 2 and a second end edge 122 located on the upstream side in the rotating direction of the rotor 2.

The first end edge 121 is curved in an arc shape along the outer circumferential surface of the rotor 2, while the second end edge 122 extends linearly. The first end edge 121 and the second end edge 122 are continuous at the center of the tooth 12 in the circumferential direction. Thus, a gap between the tooth 12 and the rotor 2 is larger on the upstream side (G2) in the rotating direction of the rotor 2 than on the downstream side (G1) in the rotating direction of the rotor 2.

An inclined portion 123 is formed between the first end edge 121 and the first side surface portion 12a. An inclined portion 124 is formed between the second end edge 122 and the second side surface portion 12b. The inclined portions 123 and 124 are inclined so that an interval therebetween increases inward in the radial direction. A boundary between the first side surface portion 12a and the inclined portion 123 is located farther from the axis C1 than a boundary between the second side surface portion 12b and the inclined portion 124.

Each insulating portion 14 has an inner wall 141 along the inner surface of the yoke 11 and a side wall 142 surrounding the periphery of the tooth 12 (i.e., the side surface portions 12a and 12b and both end surfaces in the axial direction). The insulating portion 14 is formed by integrally molding a resin with the stator core 10 or assembling a resin molded body molded as a separate component to the stator core 10.

Sensor fixing portions 15a and 15b are provided on both sides of the end portion of the tooth 12 in the circumferential direction. The sensor fixing portion 15a is provided on the first side surface portion 12a side, while the sensor fixing portion 15b is provided on the second side surface portion 12b side. The sensor fixing portions 15a and 15b protrude from the end portion of the tooth 12 in the circumferential direction. In this regard, the sensor fixing portion 15a is also referred to as a first sensor fixing portion, and the sensor fixing portion 15b is also referred to as a second sensor fixing portion.

The sensor fixing portions 15a and 15b are integrally formed with the insulating portion 14. Specifically, each of the sensor fixing portions 15a and 15b is formed to be continuous with the side wall 142 of the insulating portion 14. The inner wall 141 and the side wall 142 of the insulating portion 14 and the sensor fixing portion 15a (or the sensor fixing portion 15b) form a region in which the coils 18 in the slot 13 are disposed.

With reference to FIG. 1 again, the sensor fixing portions 15a and 15b face each other between the two teeth 12 adjacent to each other in the circumferential direction. In this example, the stator 1 has four pairs of the sensor fixing portions 15a and 15b. A sensor 7 for detecting a magnetic field from the rotor 2 is held between one pair of the sensor fixing portions 15a and 15b among the four pairs of the sensor fixing portions 15a and 15b of the stator 1.

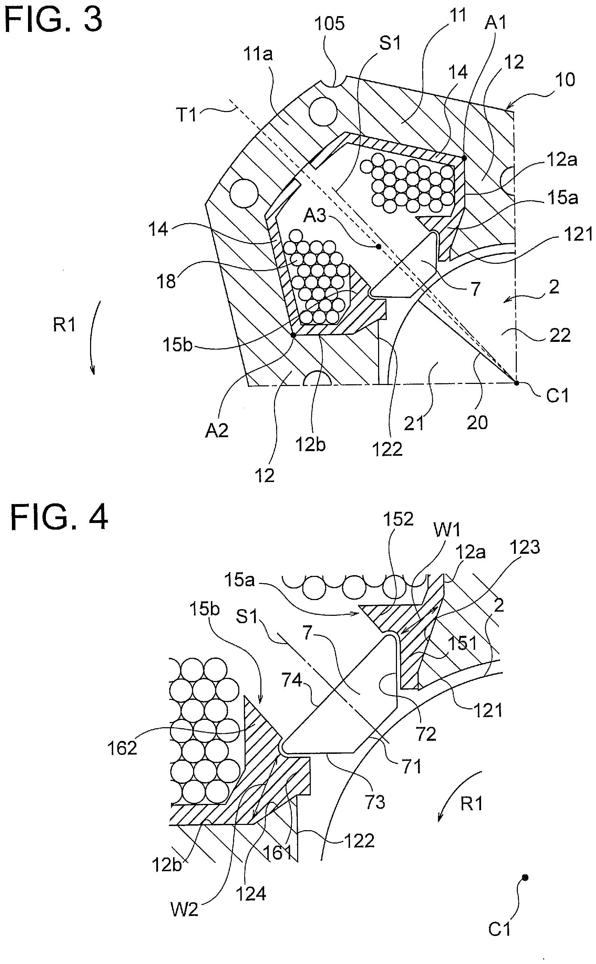

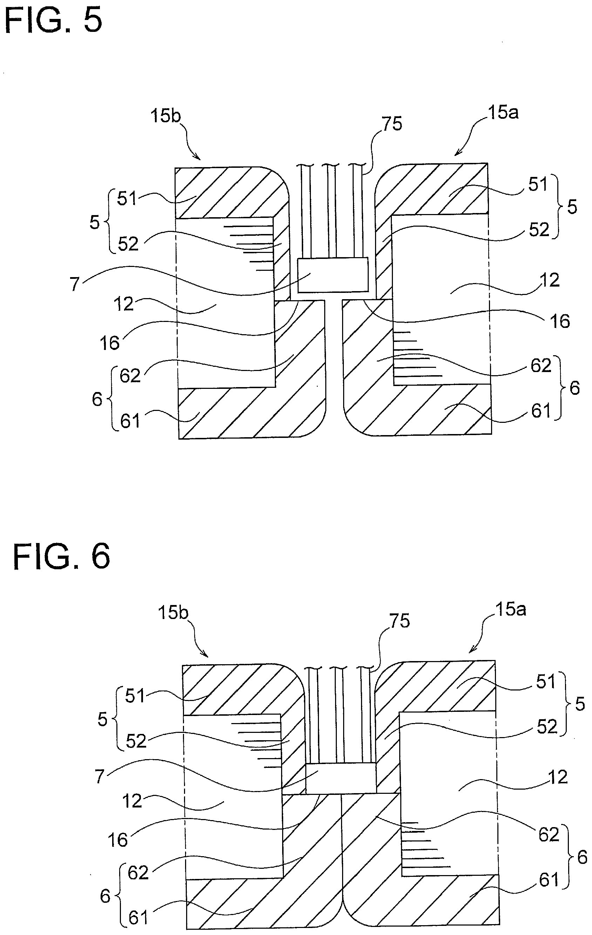

FIG. 3 is a cross-sectional view for explaining a structure for holding the sensor 7 by the sensor fixing portions 15a and 15b. FIG. 4 is an enlarged cross-sectional view showing the sensor fixing portions 15a and 15b. The sensor 7 is formed of a Hall effect element integrated with a resin package, and lead wires 75 (FIG. 5) are drawn out from one end surface of the sensor 7 in the axial direction. The sensor 7 is disposed to face the outer circumferential surface of the rotor 2 in order to detect the magnetic field from the rotor 2.

As shown in FIG. 4, the sensor 7 has a trapezoidal shape in a plane perpendicular to the axial direction. Specifically, the sensor 7 has a facing surface 71 facing the rotor 2, a back surface 74 opposite to the facing surface 71, side surfaces 72 and 73 on both sides in the circumferential direction. The side surfaces 72 and 73 are inclined with respect to each other so that an interval therebetween increases outward in the radial direction.

The sensor fixing portions 15a and 15b protrude from the teeth 12 into the slot 13 in the circumferential direction. The sensor fixing portion 15a includes a holding portion 151 facing the side surface 72 of the sensor 7 and a holding portion 152 facing the back surface 74 of the sensor 7. Similarly, the sensor fixing portion 15b includes a holding portion 161 facing the side surface 73 of the sensor 7 and a holding portion 162 facing the back surface 74 of the sensor 7.

The sensor 7 is inserted between the sensor fixing portions 15a and 15b and fixed by fitting. A position of the sensor 7 in the circumferential direction and the radial direction is determined by the holding portions 151 and 152 of the sensor fixing portion 15a and the holding portions 161 and 162 of the sensor fixing portion 15b. The holding portions 151, 152, 161, and 162 are also referred to as position restricting portions.

The sensor fixing portions 15a and 15b are integrally formed with the insulating portion 14 in this example, but this embodiment is not limited to such a configuration. The sensor fixing portions 15a and 15b may be formed as separate bodies from the insulating portion 14.

FIG. 5 is a longitudinal-sectional view showing a structure for holding the sensor 7 by the sensor fixing portions 15a and 15b. In FIG. 5, the axial direction is represented by the vertical direction, and the circumferential direction is represented by the horizontal direction. In particular, a substrate 48 side (FIG. 1) with respect to the tooth 12 is represented by an upper side, and its opposite side is represented by a lower side.

Each of the sensor fixing portions 15a and 15b has a first portion 5 and a second portion 6 in the axial direction. The first portion 5 has a first end portion 51 covering an end surface (an upper surface in FIG. 5) of the tooth 12 in the axial direction and a first side portion 52 covering the side surface of the tooth 12. The second portion 6 has a second end portion 61 covering an end surface (a lower surface in FIG. 5) of the tooth 12 in the axial direction and a second side portion 62 covering the side surface of the tooth 12.

In each of the sensor fixing portions 15a and 15b, the second side portion 62 has a larger sectional area (in other words, larger thickness) in a plane perpendicular to the axial direction than the first side portion 52. More specifically, the amount of protrusion of the second side portion 62 from the tooth 12 in the circumferential direction is larger than that of the first side portion 52.

Thus, a space into which the sensor 7 is inserted (i.e., insertion space) is formed between the first side portions 52 of the sensor fixing portions 15a and 15b. The sensor 7 inserted into the insertion space is supported on upper surfaces (referred to as sensor mounting surfaces 16) of the second side portions 62 of the sensor fixing portions 15a and 15b. The lead wires 75 of the sensor 7 are drawn out through the insertion space and connected to the substrate 48 (FIG. 1).

In this manner, each of the sensor fixing portions 15a and 15b is formed of the first portion 5 and the second portion 6 that have different sectional areas perpendicular to the axial direction, and the insertion space into which the sensor 7 is inserted is provided in the first portions 5 having the smaller sectional areas. Thus, an entire rigidity of each of the sensor fixing portions 15a and 15b is higher, as compared to the case in which each of the sensor fixing portions 15a and 15b is entirely thin.

FIG. 6 is a longitudinal-sectional view showing a desirable configuration example of the structure for holding the sensor 7 by the sensor fixing portions 15a and 15b. In the configuration example shown in FIG. 6, the first side portions 52 of the sensor fixing portions 15a and 15b sandwich the sensor 7 from both sides with no gap. The second side portions 62 of the sensor fixing portions 15a and 15b are abutted against each other. In this configuration example, displacement of the sensor 7 in the circumferential direction is surely prevented.

In FIGS. 5 and 6, each of the sensor fixing portions 15a and 15b is split into two parts, i.e., the first portion 5 and the second portion 6, but the first portion 5 and the second portion 6 may be integrated together. That is, each of the sensor fixing portions 15a and 15b only needs to have portions having different sectional areas perpendicular to the axial direction, on both sides of the mounting surface of the sensor 7 (i.e., the sensor mounting surface 16).

Next, a position of the sensor 7 will be described with reference to FIG 3. In FIG. 3, a reference line T1 is defined as a straight line passing through a middle position between the two teeth 12 and the axis C1. The middle position between the two teeth 12 refers to a middle position between roots (i.e., portions connected to the yoke 11) of the two teeth 12.

More specifically, points A1 and A2 are defined as points located at the roots (i.e., the portions connected to the yoke 11) of the two teeth 12 on the side surface portions 12a and 12b of the two teeth 12 facing each other. A point A3 is defined as a point located in the middle between the points A1 and A2 in the circumferential direction. The reference line T1 is defined as a straight line passing through the point A3 and the axis C1.

Of the sensor fixing portions 15a and 15b, the sensor fixing portion 15a is formed on a side where a gap between the tooth 12 and the rotor 2 is narrow (i.e., the first end edge 121 side). Meanwhile, the sensor fixing portion 15b is formed on a side where a gap between the tooth 12 and the rotor 2 is wide (i.e., the second end edge 122 side).

A center S1 of the sensor 7 in the circumferential direction (more specifically, a center of the Hall effect element in the circumferential direction) is located at a position offset toward the sensor fixing portion 15a side (i.e., toward a side where the gap between the tooth 12 and the rotor 2 is narrow) with respect to the reference line T1 passing through the middle position between the two teeth 12. The reason for this configuration is to make the sensor 7 face either the permanent magnet 21 or 22 of the rotor 2 in a state where the rotation of the rotor 2 stops.

In order to achieve such an offset arrangement of the sensor 7, a maximum width W1 of the sensor fixing portion 15a in the circumferential direction is made smaller than a maximum width W2 of the sensor fixing portion 15b in the circumferential direction as shown in FIG. 4. When the sensor 7 is pushed into between the sensor fixing portions 15a and 15b, the sensor fixing portion 15a with the smaller maximum width W1 is deformed, and the arrangement in which the sensor 7 is offset toward the sensor fixing portion 15a side is obtained.

When the motor 100 is assembled, the insulating portions 14 and the sensor fixing portions 15a and 15b are fitted to the split cores 17 (FIG. 2). Then, the coils 18 are wound around the insulating portions 14, and then the four split cores 17 are combined with each other to obtain the stator 1. Further, the sensor 7 is inserted into between the sensor fixing portions 15a and 15b which are located between the two teeth 12.

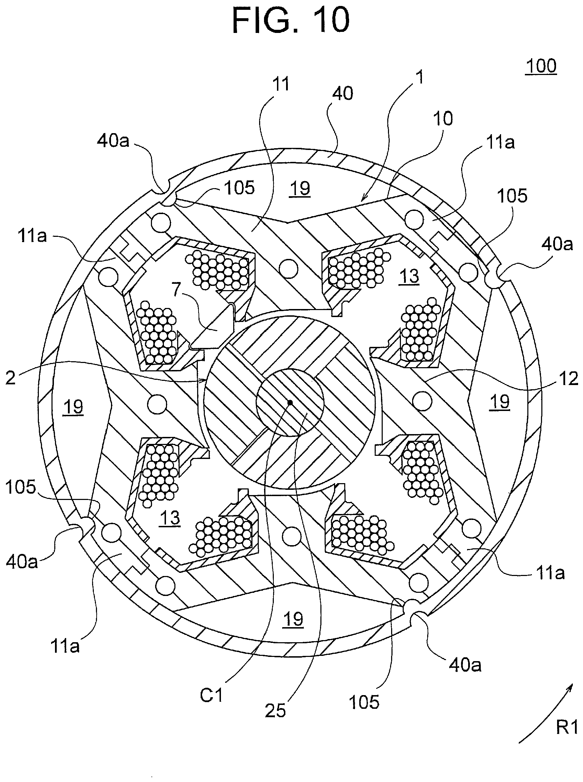

FIG. 10 is a diagram showing a state in which the motor 100 configured as above is mounted to the motor frame 4 (FIG. 1). When the motor 100 is mounted to the motor housing portion 40, the outer circumferential surfaces of the back yokes 11a of the stator 1 are fitted to the inner circumferential surface of the motor housing portion 40. Since the stator 1 has the above described fixing recesses 105, portions (indicated by reference character 40a) of the motor housing portion 40 corresponding to the fixing recesses 105 are recessed by application of an external force, and the portions 40a are fitted into the fixing recesses 105. Thus, the displacement of the motor 100 in the circumferential direction can be prevented.

### (Configuration of Electric Blower 200)

FIG. 7 is a longitudinal-sectional view showing an electric blower 200 of the first embodiment of the present invention. The electric blower 200 includes the motor 100 having the rotating shaft 25, a moving blade (fan) 31 mounted to one end side of the rotating shaft 25 of the motor 100, a stationary blade 32 disposed adjacent to the moving blade 31, and a housing 30 that houses these components.

The motor frame 4 includes the motor housing portion (i.e., a circumferential wall) 40 and a bearing housing portion 44 formed on the moving blade 31 side of the motor housing portion 40. Each of the motor housing portion 40 and the bearing housing portion 44 has a cylindrical shape about the axis C1. The stator 1 of the motor 100 is fitted inside the motor housing portion 40.

An outer diameter of the bearing housing portion 44 is smaller than an outer diameter of the motor housing portion 40. A wall portion 41 is formed between the motor housing portion 40 and the bearing housing portion 44. In this example, the wall portion 41 extends in a direction perpendicular to the axis C1. Holes 42 through which air passes in the axial direction are formed in the wall portion 41.

Two bearings 45 are mounted inside the bearing housing portion 44. An outer ring of the bearing 45 is fitted inside the bearing housing portion 44. The rotating shaft 25 is press-fitted into an inner ring of the bearing 45. The two bearings 45 are distanced from each other in the axial direction. A sleeve or the like may be disposed between the two bearings 45. The rotating shaft 25 protrudes through a hole formed on the bearing housing portion 44.

FIG. 8 is a perspective view showing an example in which the moving blade 31 is implemented as a mixed-flow fan. The moving blade 31 shown in FIG. 8 includes a plurality of vanes 31a on a surface of a hub 31b having a conical shape about the axis C1. The moving blade 31 has an inclination with respect to the axial direction, and generates an airflow outward in the radial direction. The moving blade 31 is not limited to the mixed-flow fan and may be, for example, a turbo fan.

With reference to FIG. 7 again, the stationary blade 32 includes a disk-shaped main plate 32a, a plurality of vanes 32b formed on a first surface 321 of the main plate 32a on the moving blade 31 side, and a plurality of air guide plates 32c formed on a second surface 322 of the main plate 32a opposite to the moving blade 31. The stationary blade 32 is fixed to the motor frame 4 via stationary blade support portions 43. In this example, a plurality of stationary blade support portions 43 are arranged at equal intervals in the circumferential direction about the axis C1.

The stationary blade support portion 43 may be fixed to an end of the bearing housing portion 44 as shown in FIG. 1, but may extend to the wall portion 41. A separate member for the purpose of flow rectification, strength enhancement or the like may be disposed between the stationary blade 32 and the motor frame 4, and the stationary blade 32 may be fixed to the motor frame 4 via the separate member. The fixing of the stationary blade 32 is performed, for example, by bonding or fastening with screws.

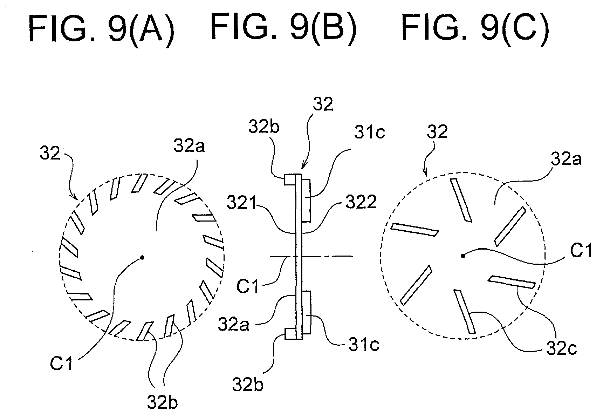

FIG. 9(A) is a diagram showing shapes and arrangement of the vanes 32b of the stationary blade 32. FIG. 9(B) is a side view of the stationary blade 32. FIG. 9(C) is a diagram showing the shapes and arrangement of the air guide plates 32c in the stationary blade 32. Each of FIG. 9(A) and FIG. 9(C) shows the shapes and arrangement as viewed from the moving blade 31 side.

As shown in FIGS. 9(A) and 9(B), the vanes 32b are arranged at equal intervals in the circumferential direction, and each vane 32b extends in a direction inclined with respect to the radial direction. The vanes 32b are formed in an outer circumferential region of the first surface 321, and are located on the outer side in the radial direction with respect to the moving blade 31 (FIG. 8). The vanes 32b have a function to rectify the air flow generated by the rotation of the moving blade 31.

As shown in FIGS. 9(B) and 9(C), the air guide plates 32c are arranged at equal intervals in the circumferential direction, and each air guide plate 32c extends in a direction inclined with respect to the radial direction. The direction in which the air guide plate 32c is inclined is opposite to the direction in which the vane 32b is inclined. The air guide plates 32c extend inward in the radial direction with respect to the vanes 32b. The air guide plates 32c have a function to direct the airflow, which is rectified by the vanes 32b, inward in the radial direction, and guide the airflow to the motor 100 side.

With reference to FIG. 7 again, the electric blower 200 has a cantilever structure in which the rotating shaft 25 is supported by the two bearings 45 provided between the moving blade 31 and the rotor 2. The number of bearings 45 is not limited to two, and may be three or more.

The housing 30 has a fan cover 34 formed along the moving blade 31 and a suction port 30a facing a center portion of the moving blade 31 in the radial direction. The housing 30 has support portions 33 that support the motor frame 4. In this example, a plurality of support portions 33 are provided in a radial manner about the axis C1. A side of the housing 30 opposite to the fan cover 34 is opened and serves as a discharge port 30b.

The electric blower 200 has a first air path P1 outside the motor frame 4 and a second air path P2 inside the motor frame 4. The first air path P1 and the second air path P2 are paths (i.e., air paths) through which the air flowing through the suction port 30a into the housing 30 flows. The air flowing through the first air path P1 is discharged from the discharge port 30b. In contrast, the air flowing through the second air path P2 passes through the motor 100 in the axial direction.

The stator 1 and the rotor 2, which are airflow resistors, are disposed in the second air path P2 inside the motor frame 4. Thus, the first air path P1 disposed outside the motor frame 4 and exhibiting a low airflow resistance is used as a main air path.

A sectional area of the first air path P1 is a sectional area (more specifically, a sectional area in a plane perpendicular to the axis C1) of a space between the housing 30 and the motor frame 4. A sectional area of the second air path P2 is a sectional area of a space inside the motor frame 4, but is smaller than the sectional area of the first air path P1 since the stator 1 and the rotor 2 are provided in the second air path P2.

The substrate 48 for controlling the driving of the motor 100 is provided on a side opposite to the moving blade 31 with respect to the motor 100. The substrate 48 is fixed to the motor frame 4 or the stator 1 by fixing members 49. The substrate 48 includes a sensor guide 46 which is a resin plate that guides the lead wires 75 of the sensor 7 in the motor 100 (FIG. 5).

### (Operation)

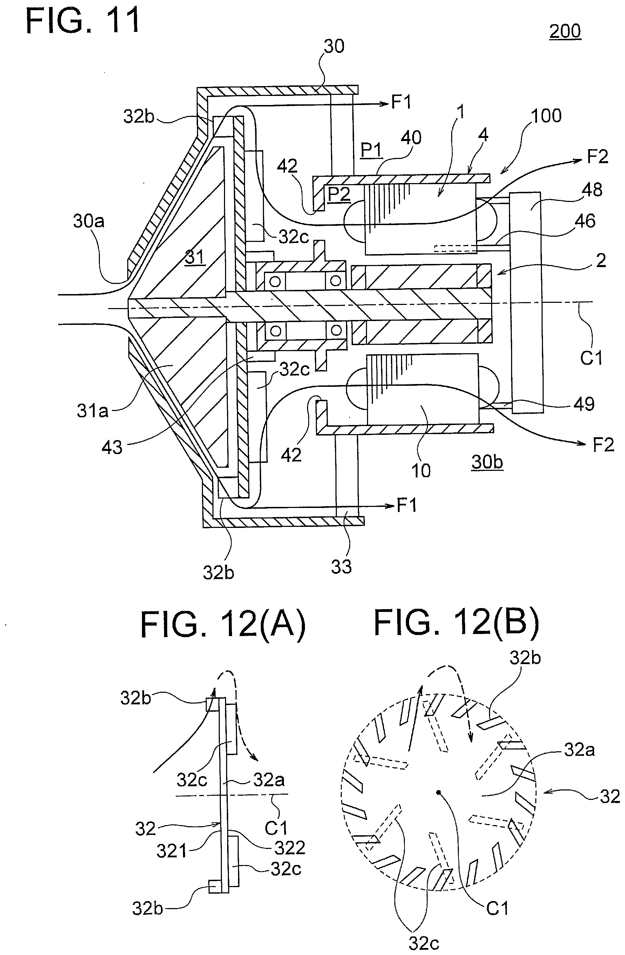

Next, an air blowing operation of the electric blower 200 of the first embodiment will be described. FIG. 11 is a diagram showing the airflow in the electric blower 200. When the motor 100 rotates by application of current to the coils 18, the rotating shaft 25 rotates, and the moving blade 31 rotates. When the moving blade 31 rotates, the air flows through the suction port 30a into the housing 30.

FIG. 12(A) is a side view illustrating a function of the stationary blade 32, and FIG. 12(B) is a front view of the stationary blade 32 as seen from the moving blade 31 side. As shown in FIGS. 12(A) and 12(B), the vanes 32b of the stationary blade 32 rectify the air (indicated by solid arrows) passing through the moving blade 31, and guide the air outward in the radial direction. The air guide plates 32c of the stationary blade 32 guide the air passing through the vanes 32b inward in the radial direction as indicated by broken arrows.

Thus, as indicated by an arrow F1 in FIG. 11, a part of the air passing through the stationary blade 32 flows in the axial direction through the first air path P1 outside the motor frame 4. As indicated by arrows F2, another part of the air passing through the stationary blade 32 is guided inward in the radial direction by the air guide plates 32c of the stationary blade 32, passes through the holes 42, flows into the motor frame 4, and flows through the second air path P2 in the axial direction.

The air flowing into the motor frame 4 flows in the axial direction through gaps 19 shown in FIG. 10 between the stator 1 and the motor housing portion 40, the inside of slots 13 of the stator 1, and the air gap between the stator 1 and the rotor 2. Thus, heat generated by the coils 18 when the motor 100 is driven can be efficiently dissipated by the air.

When the rotor 2 rotates, the heat generated in the coils 18 is likely to be dissipated since the airflow in the circumferential direction is generated by friction with the surface of the rotor 2 and circulates through the slots 13. However, when the sensor 7 is mounted between the two teeth 12 as described above, the slot 13 is closed by the sensor 7, and the heat generated by the coils 18 is likely to be retained.

In the first embodiment, since the air flows through the inside of the slots 13 of the motor 100 in the axial direction, the heat generated by the coils 18 can be dissipated even in the slot 13 where the sensor 7 is provided. Thus, the displacement of the sensor 7 due to thermal deformation of the sensor fixing portions 15a and 15b can be prevented.

### (Function)

Next, a function of the first embodiment will be described with reference to FIGS. 2 to 4. As described above, the end portion of the tooth 12 of the stator 1 has an asymmetric shape with respect to the straight line M in the radial direction that passes through the center of the tooth in the circumferential direction. That is, the gap G1 between the first end edge 121 of the tooth 12 and the rotor 2 (FIG. 2) is narrower than the gap G2 between the second end edge 122 and the rotor 2 (FIG. 2).

In a case where the shape of the tooth 12 is symmetrical, when the rotation of the rotor 2 stops, the pole center of the rotor 2 faces the center of the tooth 12 in the circumferential direction, and an inter-pole portion 20 faces the middle position between the two teeth 12. In contrast, in a case where the shape of the tooth 12 is asymmetrical as described above, when the rotation of the rotor 2 stops, the pole center of the rotor 2 faces a position that is offset with respect to the center of the tooth 12 in the circumferential direction, and the inter-pole portion 20 of the rotor 2 faces the position that is offset with respect to the middle position between the two teeth 12.

More specifically, the inter-pole portion 20 of the rotor 2 is located at a position offset toward the side where a gap between the tooth 12 and the rotor 2 is wide (in the clockwise direction in FIG. 3) with respect to the middle position (i.e., the reference line T1) between the two teeth 12.

In addition, in the first embodiment, the center S1 of the sensor 7 in the circumferential direction is located at the position offset toward the side where the gap between the tooth 12 and the rotor 2 is narrow (in the counterclockwise direction in FIG. 3) with respect to the reference line T1 passing through the middle position between the two teeth 12.

With this configuration, the sensor 7 does not face the inter-pole portion 20 of the rotor 2, but faces the permanent magnet 21 or 22 when the rotation of the rotor 2 stops. That is, the sensor 7 is capable of detecting the magnetic flux from the rotor 2 when the rotation of the rotor 2 stops.

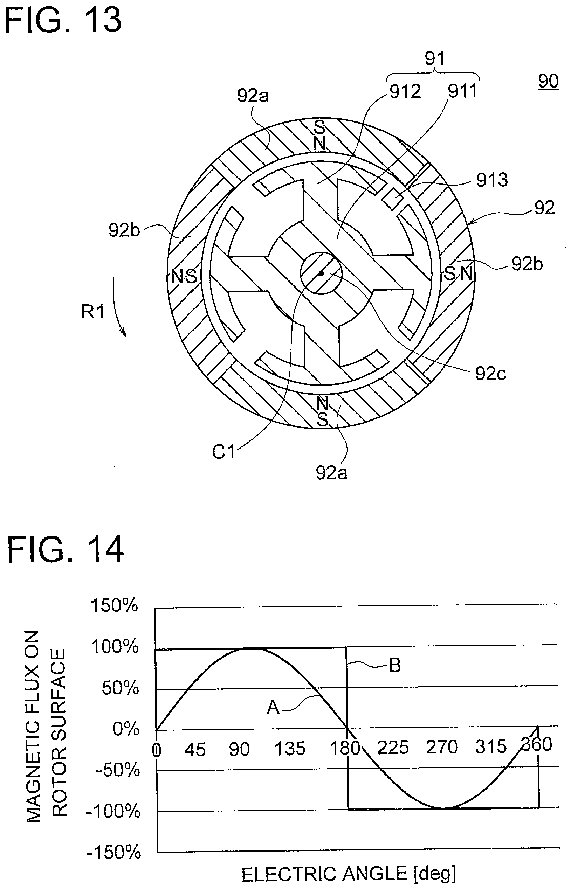

This point will be explained in comparison with a comparative example. FIG. 13 is a diagram showing a configuration of an outer-rotor motor 90 of the comparative example. The motor 90 includes an annular rotor 92 and a stator 91 disposed on an inner side of the rotor 92.

The rotor 92 has a plurality of permanent magnets 92a and 92b in the circumferential direction. The number of magnetic poles of the rotor 2 is four in this example. The permanent magnet 92a of the rotor 92 is magnetized to have an N pole on its inner side in the radial direction and an S pole on its outer side in the radial direction. The permanent magnet 92b is magnetized to have an S pole on its inner side in the radial direction and an N pole on its outer side in the radial direction.

The stator 91 has a cylindrical yoke 911 and four teeth 912 extending outward in the radial direction from the yoke 911. A rotation shaft 92c is inserted through a center of the yoke 911. The rotation shaft 92c is connected to the rotor 92 via a not-shown disk portion. A sensor 913 for detecting the magnetic flux from the rotor 92 is disposed between two teeth 912.

FIG. 14 is a graph showing a change in the magnetic flux detected by the sensor 7 of this embodiment and a change in the magnetic flux detected by the sensor 913 of the comparative example. The horizontal axis represents the rotation angle (electric angle) of the rotor, while the vertical axis represents the magnetic flux expressed as a relative value. The waveform A indicates the magnetic flux detected by the sensor 7 of this embodiment, while the waveform B indicates the magnetic flux detected by the sensor 913 of the comparative example.

In the outer-rotor motor such as that in the comparative example, the permanent magnets 92a and 92b of the rotor 92 are sufficiently large. Thus, the magnetic flux entering the sensor 913 when the sensor 913 faces the permanent magnet 92a is opposite to that when the sensor 913 faces the permanent magnet 92b. Therefore, the magnetic flux detected by the sensor 913 of the comparative example changes in the form of a rectangular wave (waveform B). In contrast, in the inner-rotor motor such as that in this embodiment, the magnetic flux detected by the sensor 7 changes in the form of a sinusoidal wave (waveform A) which is zero at the inter-pole portion and is maximum at the pole center.

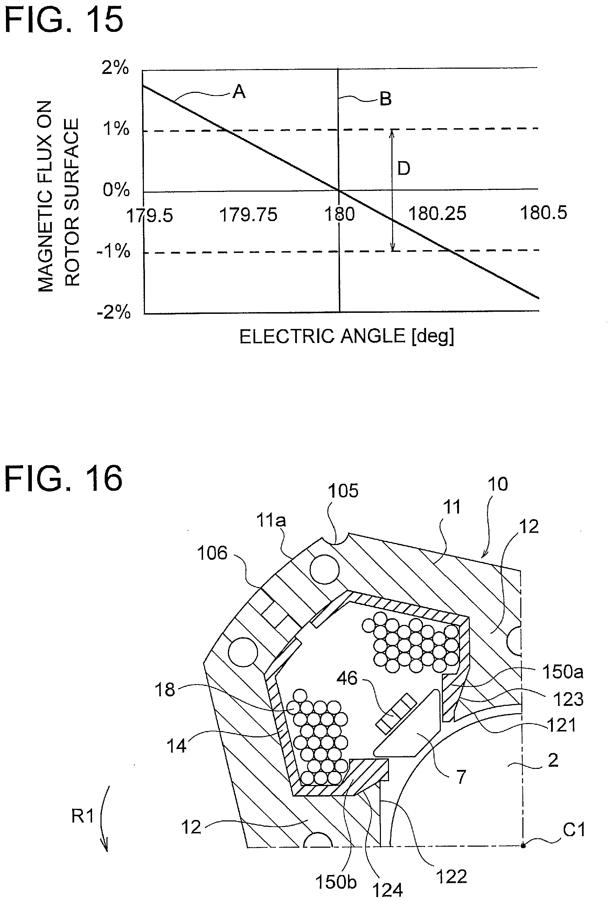

FIG. 15 is a graph showing a range of the rotor angle from 179.5 to 180.5 degrees (i.e., in a range of ±0.5 degrees with respect to the inter-pole portion) in FIG. 14 in an enlarged scale. As shown in FIG. 15, the magnetic flux detected by the sensor 913 of the comparative example changes sharply at the inter-pole portion (at 180 degrees) (waveform B). In contrast, the magnetic flux (waveform A) detected by the sensor 7 of this embodiment continuously changes across the inter-pole portion.

In FIG. 15, when the level of the magnetic flux detectable by the sensor 7 is ±1% or more of the maximum magnetic flux, an output of the sensor 7 is approximately zero in the range of ±0.25 degrees with respect to the inter-pole portion (indicated by the arrow D).

Thus, in order to enable the sensor 7 to detect the magnetic flux from the rotor 2 when the rotation of the rotor 2 stops, it is desirable that the center of the sensor 7 in the circumferential direction is offset (shifted) by 0.25 degrees or more in the circumferential direction with respect to the inter-pole portion 20 of the rotor 2 when the rotation of the rotor 2 stops.

In the first embodiment, as described with reference to FIG. 3, the end portion of the tooth 12 has the asymmetric shape, and the center S1 of the sensor 7 in the circumferential direction is located at the position offset with respect to the reference line T1. Thus, when the rotation of the rotor 2 stops, the center S1 of the sensor 7 in the circumferential direction can be shifted by 0.25 degrees or more in the circumferential direction with respect to the inter-pole portion 20 of the rotor 2. That is, when the rotation of the rotor 2 stops, the sensor 7 is capable of detecting the magnetic flux from the rotor 2. This makes it possible to avoid a situation in which the output of the sensor 7 is zero at starting of the motor 100. Thus, reliability of the motor 100 can be enhanced.

Further, in the first embodiment, since the stator core 10 is formed by a combination of the split cores 17 (FIG. 2), a winding operation of the coil 18 is facilitated and the coil 18 can be wound at high density, as compared to when the stator core 10 is an integrated core. In this regard, when the stator core 10 is formed by the combination of the split cores 17, displacement of the sensor 7 may occur due to an error in combining the split cores 17, as compared to when the stator core 10 is the integrated core.

However, in the first embodiment, the center S1 of the sensor 7 in the circumferential direction is located at the position offset with respect to the reference line T1 as described above. Thus, by ensuring a certain offset amount (angle), the magnetic flux from the rotor 2 can be detected by the sensor 7 when the rotation of the rotor 2 stops, even if the displacement of the sensor 7 occurs during assembly.

### (Effects of Embodiment)

As described above, in the first embodiment, the center S1 of the sensor 7 in the circumferential direction is located at the position offset in the circumferential direction with respect to the reference line T1 passing through the axis C1 and the middle position between the two teeth 12 in the circumferential direction. Thus, when the rotation of the rotor 2 stops, the sensor 7 faces either of the permanent magnets 21 and 22 of the rotor 2 and is capable of detecting the magnetic flux. Thus, the reliability of the motor 100 can be enhanced.

Further, the end portion of the tooth 12 has the asymmetric shape, and the gap between the tooth 12 and the rotor 2 is larger on one side (i.e., the second end edge 122) in the circumferential direction than on the other side (i.e., the first end edge 121). The center S1 of the sensor 7 in the circumferential direction is offset toward one of the two teeth 12 that has a smaller gap from the rotor 2 on the side adjacent to the sensor 7. Thus, when the rotation of the rotor 2 stops, the sensor 7 can be surely made to face either of the permanent magnets 21 and 22 of the rotor 2.

Furthermore, since the sensor 7 is fixed between the sensor fixing portions 15a and 15b provided between the two teeth 12, the sensor 7 can be held in a stable state. By integrally forming the sensor fixing portions 15a and 15b with the insulating portions 14, the manufacturing process of the motor can be simplified, and the manufacturing cost can be reduced.

Moreover, the width W1 of the sensor fixing portion 15a in the circumferential direction is narrower than the width W2 of the sensor fixing portion 15b in the circumferential direction. Thus, when the sensor 7 is pushed into between the sensor fixing portions 15a and 15b, the sensor fixing portion 15a side is largely bent, and thus the center of the sensor 7 in the circumferential direction can be offset toward the sensor fixing portion 15a side.

In addition, the sensor fixing portions 15a and 15b have the holding portions (position restricting portions) 151, 152, 161, and 162 that restrict the position of the sensor 7 in the radial direction and the circumferential direction, and thus the positional accuracy of the sensor 7 can be enhanced.

Further, the insertion groove into which the sensor 7 is inserted in the axial direction is formed between the sensor fixing portions 15a and 15b, and thus the mounting of the sensor 7 can be facilitated and the lead wires 75 can be drawn out from the insertion groove.

### Modification

FIG. 16 is a cross-sectional view for explaining the structure for holding the sensor 7 in a modification of the first embodiment. In the modification, the sensor guide 46 is disposed on the outer side of the sensor 7 in the radial direction. That is, the sensor 7 is supported by the sensor guide 46 from the outer side in the radial direction.

A surface of each of the sensor fixing portions 150a and 150b on the side facing the sensor 7 in the modification has a straight shape. A position of the sensor 7 can be restricted in the radial direction and the circumferential direction by the sensor guide 46 and the sensor fixing portions 150a and 150b. According to the modification, since the sensor guide 46 is used, the shape of the sensor fixing portions 150a and 150b can be made simple.

### Second Embodiment

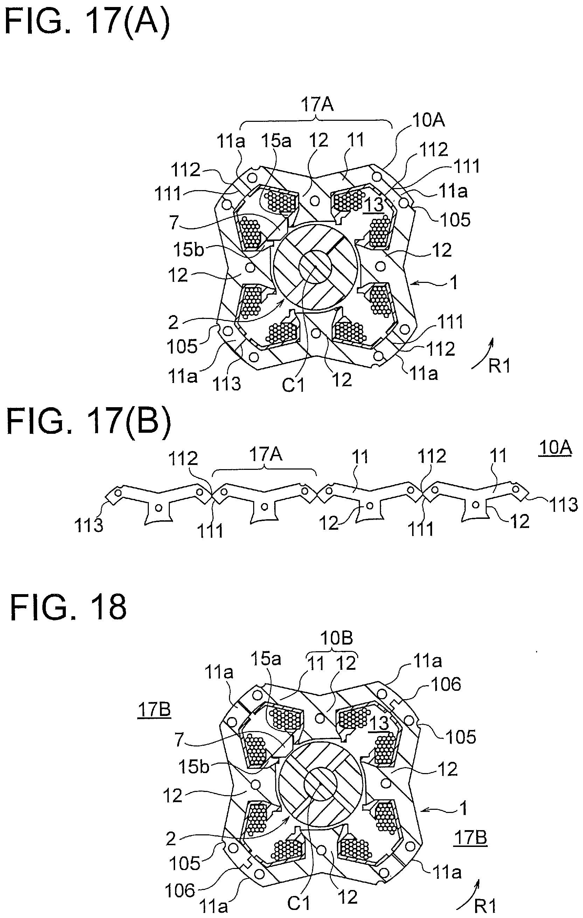

Next, a second embodiment of the present invention will be described. FIG. 17(A) is a cross-sectional view showing a motor of a second embodiment. The motor 100 (FIG. 1) of the above described first embodiment has the stator core 10 formed by a combination of the plurality of split cores 17. In contrast, the motor of the second embodiment has a stator core 10A formed by a combination of a plurality of joint cores 17A connected with each other via thin portions 112.

As shown in FIG. 17(A), each of the three back yokes 11a among four back yokes 11a in the stator core 10A is provided with a separation surface 111 and a thin portion 112, instead of the split surface 106 described in the first embodiment (FIG. 1). The separation surface 111 extends from the inner circumference toward the outer circumference of the back yoke 11a, but does not reach the outer circumference of the back yoke 11a. The thin portion 112 (i.e., connecting portion) which is deformable is formed between the terminal end of the separation surface 111 and the outer circumferential part of the back yoke 11a. Instead of the thin portion 112, a crimping portion may be provided.

One of the four back yokes 11a in the stator core 10A is provided with welding surfaces (i.e., joint surfaces) 113. The welding surfaces 113 extend from the inner circumference toward the outer circumference of the back yoke 11a and reach the outer circumference of the back yoke 11a.

In the stator core 10A, each of the blocks divided by the separation surfaces 111 and the thin portions 112 (or the welding surfaces 113) is referred to as a joint core 17A. In this example, the stator core 10A has four joint cores 17A each including the tooth 12.

FIG. 17(B) is a schematic diagram showing a state in which the stator core 10 is expanded in a belt shape. The stator core 10A can be expanded in a belt shape as shown in FIG. 17(B) from the state shown in FIG. 17(A) by deforming the thin portions 112. The joint cores 17A are connected with each other in a row via the thin portions 112. The welding surfaces 113 are located on both ends of the row.

In an assembly step of the motor, in a state where the joint cores 17A are expanded in the belt shape (FIG. 17(B)), the insulating portions 14 (including the sensor fixing portions 15a and 15b) are fitted to the joint cores 17A. Then, the coils 18 are wound around the insulating portions 14, the joint cores 17A are bent in an annular shape, and the welding surfaces 113 are welded together to thereby obtain the stator core 10A. Thereafter, the sensor 7 is mounted to the sensor fixing portions 15a and 15b between the two teeth 12. Other structures of the stator core 10A are the same as those of the stator core 10 described in the first embodiment.

In the motor of the second embodiment, the stator core 10A is formed of the joint cores 17A, and thus a fitting operation of the insulating portions 14 and the sensor fixing portions 15a and 15b and a winding operation of the coils 18 are easier as compared to when the stator core is formed of an integrated core. Thus, even when the size of the motor 100 is reduced, the coil 18 can be wound at high density, and a coil space factor can be enhanced.

### First Modification

FIG. 18 is a cross-sectional view showing a motor of a first modification of the second embodiment. The motor (FIG. 17(A)) of the above described second embodiment has the stator core 10A that is formed by a combination of the plurality of joint cores 17A each including the tooth 12. In contrast, the motor of the first modification has a stator core 10B that is formed by a combination of a plurality of split cores 17B each including two teeth 12.

As shown in FIG. 18, among the four back yokes 11a of the stator core 10B, two back yokes 11a are provided with the split surfaces 106 described in the first embodiment (FIG. 1), while the remaining two back yokes 11a are provided with no split surfaces 106. The back yokes 11a provided with the split surfaces 106 and the back yokes 11a provided with no split surfaces 106 are alternately arranged in the circumferential direction.

In the stator core 10B, each of the blocks divided by the split surfaces 106 is referred to as a split core 17B. In this example, the stator core 10B has two split cores 17B each including two teeth 12.

In an assembly step of the motor, the insulating portions 14 (the sensor fixing portions 15a and 15b) are fitted to the split cores 17B. Then, the coils 18 are wound around the insulating portions 14, and the two split cores 17B are combined with each other to obtain the stator core 10B. Thereafter, the sensor 7 is mounted to the sensor fixing portions 15a and 15b between the two teeth 12. Other structures of the stator core 10B are the same as those of the stator core 10 described in the first embodiment. According to the first modification, the same effects as the second embodiment can be obtained.

### Second Modification

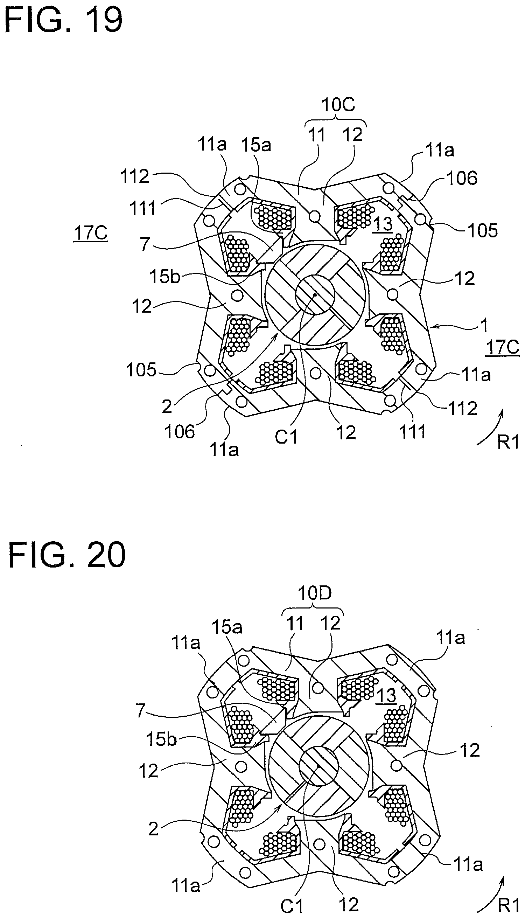

FIG. 19 is a cross-sectional view showing a motor of a second modification of the second embodiment. The motor (FIG. 17(A)) of the above described second embodiment has the stator core 10A formed by a combination of the plurality of joint cores 17A. In contrast, the motor of the second modification has a stator core 10C that is formed by a combination of split cores and joint cores.

As shown in FIG. 19, among the four back yokes 11a of the stator core 10C, two back yokes 11a are provided with the split surfaces 106 described in the first embodiment (FIG. 1), while the remaining two back yokes 11a are provided with the separation surfaces 111 and the thin portions 112 described in the second embodiment (FIG. 17). The back yokes 11a provided with the split surfaces 106 and the back yokes 11a provided with the separation surfaces 111 and the thin portions 112 are alternately arranged in the circumferential direction.

In the stator core 10C, each of the blocks divided by the split surfaces 106 is referred to as a split core 17C. In this example, the stator core 10B has two split cores 17C each including two teeth 12. Each of the split cores 17C is expandable at its center in the circumferential direction by the thin portion 112.

In an assembly step of the motor, the insulating portions 14 (the sensor fixing portions 15a and 15b) are fitted to the split cores 17C in a state where the split cores 17C are expanded in a belt shape. Then, the coils 18 are wound around the insulating portions 14, and the two split cores 17C are combined with each other to obtain the stator core 10B. Thereafter, the sensor 7 is mounted to the sensor fixing portions 15a and 15b between the two teeth 12. Other structures of the stator core 10C are the same as those of the stator core 10 described in the first embodiment. According to the second modification, the same effects as the second embodiment can be obtained.

### Third Modification

FIG. 20 is a cross-sectional view showing a motor of a third modification of the second embodiment. The motor (FIG. 17(A)) of the above described second embodiment has the stator core 10A formed by a combination of the plurality of joint cores 17A. In contrast, the motor of the fourth modification has a stator core 10D having an integrated structure.

As shown in FIG. 20, the stator core 10D is provided with neither the split surfaces 106 described in the first embodiment (FIG. 1), nor the separation surfaces 111 and the thin portions 112 described in the second embodiment (FIG. 17). It is thus necessary to fit the insulating portions 14 and the sensor fixing portions 15a and 15b to the annular stator core 10D, and to wind the coils 18 on the annular stator core 10D. Other structures of the stator core 10D are the same as those of the stator core 10 described in the first embodiment.

In the above described embodiments and modifications, the stator cores 10 to 10D each having four teeth 12 have been described, but it is sufficient that the number of teeth is two or more. Further, the yoke 11 of each of the stator cores 10 to 10D includes the back yoke 11a and the connecting yoke 11b in the above description, but the yoke 11 may be formed as an annular yoke.

### (Electric Vacuum Cleaner)

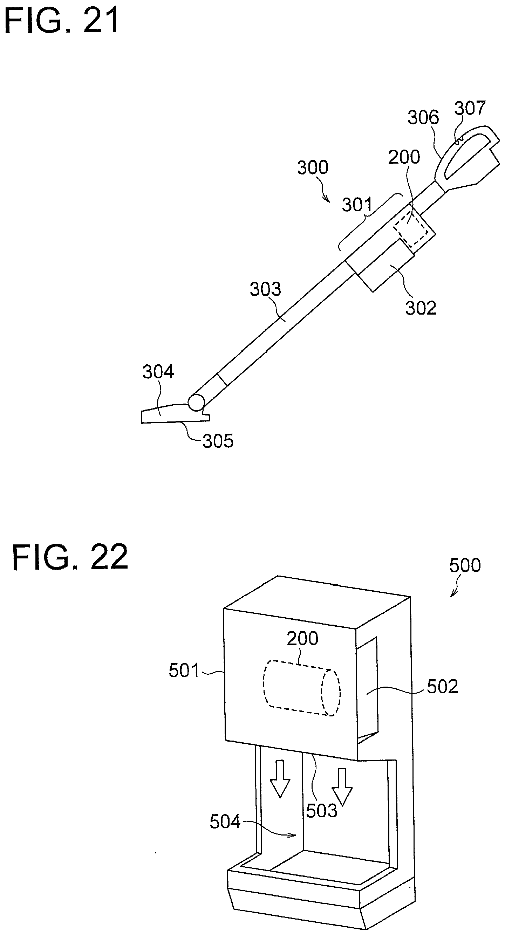

Next, an electric vacuum cleaner to which the electric blower of each of the embodiments and modifications is applicable will be described. FIG. 21 is a schematic diagram showing an electric vacuum cleaner 300 using the electric blower 200 (FIG. 7) of the first embodiment.

The electric vacuum cleaner 300 includes a vacuum cleaner main body 301, a pipe 303 connected to the vacuum cleaner main body 301, and a suction portion 304 connected to an end of the pipe 303. The suction portion 304 is provided with a suction opening 305 for sucking air containing dust. A dust collection container 302 is disposed inside the vacuum cleaner main body 301.

The electric blower 200 is disposed inside the vacuum cleaner main body 301. The electric blower 200 sucks air containing dust through the suction opening 305 into the dust collection container 302. The electric blower 200 has the configuration, for example, shown in FIG. 7. The vacuum cleaner main body 301 is also provided with a grip portion 306 which is gripped by a user, and the grip portion 306 is provided with an operation portion 307 such as an on/off switch.

When the user grips the grip portion 306 and operates the operation portion 307, the motor 100 rotates and the electric blower 200 operates. When the electric blower 200 operates, the suction air is generated, and dust is sucked together with the air through the suction opening 305 and the pipe 303. The sucked dust is stored in the dust collection container 302.

The electric vacuum cleaner 300 uses the electric blower 200 having high reliability, and thus can achieve a high operation efficiency.

### (Hand Dryer)

Next, a hand dryer to which the electric blower of each of the embodiments and modifications is applicable will be described. FIG. 22 is a schematic diagram showing a hand dryer 500 using the electric blower 200 (FIG. 7) of the first embodiment.

The hand dryer 500 includes a casing 501 and the electric blower 200 fixed in the casing 501. The electric blower 200 has the configuration, for example, shown in FIG. 7. The casing 501 has an intake opening 502 and an outlet opening 503. The casing 501 includes a hand insertion portion 504 which is located below the outlet opening 503 and into which hands of a user are to be inserted. The electric blower 200 generates an airflow to suck air outside the casing 501 through the intake opening 502 and to blow the air to the hand insertion portion 504 through the outlet opening 503.

When the hand dryer 500 is turned on, an electric power is supplied to the electric blower 200, and the motor 100 is driven. While the electric blower 200 is driven, the air outside the hand dryer 500 is sucked through the intake opening 502 and blown out from the outlet opening 503. When the hands of the user are inserted into the hand insertion portion 504, water droplets attached to the hands can be blown off or evaporated by the air blown from the outlet opening 503.

The hand dryer 500 uses the electric blower 200 having high reliability, and thus can achieve high operation efficiency.

Although the desirable embodiments of the present invention have been specifically described above, the present invention is not limited to the above described embodiments, and various modifications and changes may be made without departing from the gist of the present invention.

### DESCRIPTION OF REFERENCE CHARACTERS

1 stator; 2 rotor; 4 motor frame; 5 first portion; 6 second portion; 7 sensor; 10, 10A, 10B, 10C, 10D stator core; 11 yoke; 11a back yoke; 11b connecting yoke; 12 tooth; 12a first side surface portion; 12b second side surface portion; 13 slot; 14 insulating portion; 15a sensor fixing portion (first sensor fixing portion); 15b sensor fixing portion (second sensor fixing portion); 16 holding surface; 17, 17B, 17C split core; 17A joint core; 18 coil; 21, 22 permanent magnet; 25 rotating shaft; 30 housing; 30a suction port; 30b discharge port; 31 moving blade (fan); 31a vane; 32 stationary blade; 32a main plate; 32b vane; 32c air guide plate (air guide member); 33 support portion; 34 fan cover; 40 motor housing portion; 41 wall portion; 42 hole; 44 bearing housing portion; 45 bearing; 46 sensor guide; 48 substrate; 51 first end; 52 first side portion; 61 second end; 62 second side portion; 71 facing surface; 72, 73 side surface; 74 back surface; 75 lead wire; 100 motor; 105 fixing recess; 106 split surface; 111 separation surface; 112 thin portion (connecting portion); 113 welding surface (joint surface); 151, 152, 161, 162 holding portion (position restricting portion); 200 electric blower; 300 electric vacuum cleaner; 301 vacuum cleaner main body; 302 dust collection container; 303 pipe; 304 suction portion; 305 suction opening; 306 grip portion; 307 operation portion; 500 hand dryer; 501 housing; 502 intake opening; 503 outlet opening; 504 hand insertion portion.

## Claims

1. A motor of single-phase comprising:
a rotor having a plurality of magnetic poles, and a stator provided to surround the rotor,
the stator comprising:
a yoke extending so as to surround a rotation axis of the rotor;
a plurality of teeth extending from the yoke in a direction toward the rotation axis, a number of the plurality of teeth being equal to a number of the magnetic poles; and
a sensor facing the rotor and disposed between two teeth adjacent to each other in a circumferential direction about the rotation axis among the plurality of teeth,
wherein when a reference line is defined as a straight line passing through the rotation axis and a middle position between the two teeth in the circumferential direction, and
wherein a center of the sensor in the circumferential direction is located at a position offset in the circumferential direction with respect to the reference line.

2. The motor according to claim 1, wherein a gap between each of the two teeth and the rotor is larger on one side than on the other side in the circumferential direction, and
wherein the center of the sensor in the circumferential direction is located at a position offset toward one of the two teeth that has a smaller gap from the rotor on a side adjacent to the sensor in the circumferential direction.

3. The motor according to claim 2, further comprising a first sensor fixing portion and a second sensor fixing portion which are provided between the two teeth,
wherein the sensor is fixed between the first sensor fixing portion and the second sensor fixing portion.

4. The motor according to claim 3, wherein one of the two teeth is provided with the first sensor fixing portion on a side where a gap from the rotor is smaller,
wherein the other of the two teeth is provided with the second sensor fixing portion on a side where a gap from the rotor is larger, and
wherein a width of the first sensor fixing portion in the circumferential direction is narrower than a width of the second sensor fixing portion in the circumferential direction.

5. The motor according to claim 3 or 4, wherein each of the first sensor fixing portion and the second sensor fixing portion has a position restricting portion to restrict a position of the sensor in a radial direction about the rotation axis and in the circumferential direction.

6. The motor according to any one of claims 3 to 5, wherein an insertion groove into which the sensor is inserted in a direction of the rotation axis is formed between the first sensor fixing portion and the second sensor fixing portion.

7. The motor according to any one of claims 3 to 6, wherein a sensor guide is disposed on an outer side of the sensor in a radial direction about the rotation axis, and
wherein the sensor is held between the sensor guide and each of the first sensor fixing portion and the second sensor fixing portion.

8. The motor according to any one of claims 3 to 7, wherein each of the first sensor fixing portion and the second sensor fixing portion is formed of an insulating body.

9. The motor according to claim 8, wherein each of the first sensor fixing portion and the second sensor fixing portion is formed integrally formed with an insulating portion to wind coils around the two teeth.

10. The motor according to any one of claims 1 to 9, where the middle position between the two teeth in the circumferential direction is a middle position between roots of the two teeth in the circumferential direction.

11. The motor according to any one of claims 1 to 10, wherein the stator comprises a stator core having a plurality of blocks combined with each other at a split surface or a plurality of blocks connected with each other via a connecting portion.

12. An electric blower comprising:
the motor according to any one of claims 1 to 11;
a moving blade rotated by the motor; and
a frame housing the motor.

13. The electric blower according to claim 12, wherein a fixing recess is formed on an outer circumferential surface of the stator, and
wherein the frame has an engagement portion that engages with the fixing recess.

14. An electric vacuum cleaner comprising:
a suction portion having a suction opening;
a dust collection container to collect dust; and
the electric blower according to claim 12 or 13 that sucks air containing dust through the suction portion to the dust collection container.

15. A hand dryer comprising:
a casing having an intake opening and an outlet opening, and
the electric blower according to claim 12 or 13 disposed inside the housing, the electric blower suctioning air through the intake opening and blowing air through the outlet opening.
